(19) Europäisches Patentamt
European Patent Office
Office européen des brevets

(11) EP 3 528 008 A1

(12) EUROPÄISCHE PATENTANMELDUNG

(43) Veröffentlichungstag:
21.08.2019 Patentblatt 2019/34

(51) Int Cl.:
G01S 19/08 (2010.01)   G01S 19/07 (2010.01)

(21) Anmeldenummer: 18210766.4

(22) Anmeldetag: 06.12.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 14.02.2018   DE 102018202223

(71) Anmelder: Robert Bosch GmbH
70469 Stuttgart (DE)

(72) Erfinder:
• Limberger, Marco
71638 Ludwigsburg (DE)
• Huck, Bastian
30559 Hannover (DE)

(54) VERFAHREN UND VORRICHTUNG ZUM BEREITSTELLEN EINER INTEGRITÄTSINFORMATION ZUM ÜBERPRÜFEN VON ATMOSPHÄRENKORREKTURPARAMETERN BEI EINER SATELLITENNAVIGATION FÜR EIN FAHRZEUG

(57) Die Erfindung betrifft ein Verfahren zum Bereitstellen einer Integritätsinformation (445) zum Überprüfen von Atmosphärenkorrekturparametern (145) zur Korrektur atmosphärischer Störungen bei einer Satellitennavigation für ein Fahrzeug (470). Das Verfahren weist einen Schritt des Einlesens von Zustandssignalen (135) hinsichtlich eines Zustands der Atmosphäre zwischen zumindest einem Satellitenempfangsgerät (130; 160) und zumindest einem Satelliten (110) von dem zumindest einen Satellitenempfangsgerät (130; 160) auf. Jedes Zustandssignal (135) repräsentiert unter Verwendung mindestens eines zwischen einem Satelliten (110) und einem Satellitenempfangsgerät (130; 160) übertragenen Satellitensignals (115) bestimmte und von einem Zustand der Atmosphäre zwischen dem Satelliten (110) und dem Satellitenempfangsgerät (130; 160) abhängige Zustandsdaten. Auch weist das Verfahren einen Schritt des Bestimmens der Integritätsinformation (445) unter Verwendung der Zustandsdaten auf, wobei eine zeitliche Veränderung der Zustandsdaten ausgewertet wird.

Fig. 4

EP 3 528 008 A1

**Beschreibung**

Stand der Technik

Die Erfindung geht von einer Vorrichtung und einem Verfahren nach Gattung der unabhängigen Ansprüche aus. Gegenstand der vorliegenden Erfindung ist auch ein Computerprogramm.

Zur Korrektur von Positionierungssignalen in der Satellitennavigation können beispielsweise Abweichungen durch die Atmosphäre der Erde berücksichtigt werden, insbesondere in der Ionosphäre. Hierzu kann zum Beispiel unter anderem auf ein Netzwerk von bodenseitigen Messstationen zurückgegriffen werden. Unter Verwendung eines solchen Netzwerks können Korrekturdaten bereitgestellt werden.

Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann insbesondere eine Integritätsüberwachung von Atmosphärenkorrekturdaten, beispielsweise Ionosphärenkorrekturdaten, unter Verwendung von Gradienten bzw. Verlaufsinformationen von Zustandsdaten der Atmosphäre ermöglicht werden, die aus zwischen Satelliten und Satellitenempfängern übertragenen Signalen hergeleitet werden können. Beispielsweise kann somit unter Verwendung von Messwerten, die zum Beispiel mittels kostengünstiger Satellitenempfangsgeräte erhalten werden, ein vierdimensionales Elektronendichtemodell der Atmosphäre, beispielsweise über geografische Länge, geografische Breite, Höhe und Zeit, oder ein dreidimensionales Modell einer integrierten Elektronendichte (TEC = Total Electron Content, Elektronendichte bzw. Gesamtelektroneninhalt), beispielsweise über geografische Länge, geografische Breite und Zeit, erhalten werden. Dabei kann insbesondere eine Rate einer Elektronendichte bzw. ein sogenannter ROT (ROT = rate of TEC), eine Veränderungsrate eines Elektronendichteindex bzw. ein sogenannter ROTI (ROTI = rate of change of TEC index) und zusätzlich oder alternativ Qualitätsindikatorwerte bzw. QI-Werte und deren Dynamik genutzt werden.

Korrekturdaten können dabei unter Verwendung eines Netzwerks aus bodenseitigen Messstationen und zumindest einem geostationären Satelliten bereitgestellt werden. Eine Übertragung kann mittels geostationärer Satelliten, über Internet oder ein Telekommunikationsnetzwerk erfolgen. Bodenseitige Stationen können zur Berechnung von Fehlern genutzt werden. Eine Übertragung von Fehlermodellen kann über geostationäre Satelliten, Internet oder eine andere Kommunikationsmöglichkeit erfolgen.

Vorteilhafterweise können gemäß Ausführungsformen daher die Rate der Elektronendichte, die Veränderungsrate des Elektronendichteindex und zusätzlich oder alternativ die Qualitätsindikatorwerte und deren Dynamik genutzt werden, um eine Integritätsüberwachung von durch Korrekturanbieter gelieferten Korrekturdaten in sicherheitskritischen Anwendungen, wie z. B. hochautomatisiertem Fahren, bzw. eine anwenderbasierte Integritätsüberwachung zu ermöglichen. Dabei kann insbesondere eine Überwachung von Ionosphärenkorrekturen ermöglicht werden, zu denen häufig keine Integritätsinformationen durch Korrekturdienste bereitgestellt werden. Somit können beispielsweise auch in besonders sicherheitskritischen Anwendungen entsprechend hohe Anforderungen an die Integrität zuverlässig erfüllt werden.

Es wird ein Verfahren zum Bereitstellen einer Integritätsinformation zum Überprüfen von Atmosphärenkorrekturparametern zur Korrektur atmosphärischer Störungen bei einer Satellitennavigation für ein Fahrzeug vorgestellt, wobei das Verfahren folgende Schritte aufweist:

Einlesen von Zustandssignalen hinsichtlich eines Zustands der Atmosphäre zwischen zumindest einem Satellitenempfangsgerät und zumindest einem Satelliten von dem zumindest einen Satellitenempfangsgerät, wobei jedes Zustandssignal unter Verwendung mindestens eines zwischen einem Satelliten und einem Satellitenempfangsgerät übertragenen Satellitensignals bestimmte und von einem Zustand der Atmosphäre zwischen dem Satelliten und dem Satellitenempfangsgerät abhängige Zustandsdaten repräsentiert; und

Bestimmen der Integritätsinformation unter Verwendung der Zustandsdaten, wobei eine zeitliche Veränderung der Zustandsdaten ausgewertet wird.

Dieses Verfahren kann beispielsweise in Software oder Hardware oder in einer Mischform aus Software und Hardware beispielsweise in einem Steuergerät oder einer Vorrichtung implementiert sein. Satellitennavigation kann auch eine Lokalisierung eines Fahrzeugs einschließen, in dem ein Satellitenempfangsgerät angeordnet ist. Die atmosphärischen Störungen können insbesondere in der Ionosphäre der Erde auftreten. Ein Satellitenempfangsgerät kann ein stationäres Referenz-Satellitenempfangsgerät oder ein fahrzeuggebundenes Satellitenempfangsgerät bzw. Satellitenempfangsgerät des Fahrzeugs sein. Das Satellitenempfangsgerät kann ausgebildet sein, um unter Verwendung mindestens eines Satellitensignals eine Positionsbestimmung durch Satellitennavigation für einen Nutzer und zusätzlich oder alternativ für eine Ausrüstung eines Nutzers zu ermöglichen. Das Satellitenempfangsgerät kann als ein Zweifrequenz-Satellitenempfangsgerät oder Mehrfrequenz-Satellitenempfangsgerät ausgeführt sein.

Gemäß einer Ausführungsform kann der Schritt des Bestimmens mittels zumindest eines stationären Referenz-Satellitenempfangsgeräts, mittels einer fahrzeugexternen Bestimmungseinrichtung und zusätzlich oder alternativ mittels eines Satellitenempfangsgeräts des Fahrzeugs ausgeführt werden. Die fahrzeugexterne Bestimmungseinrichtung kann Teil einer Datenverarbeitungsanlage eines Korrekturdienstanbieters sein. Insbesondere kann die fahrzeugexterne Bestimmungseinrichtung als ein sogenanntes Server-Backend oder dergleichen ausgeführt sein. Auch kann die fahrzeugexterne Bestimmungseinrichtung mittels Cloud Computing realisiert sein. Eine solche Ausführungsform bietet den Vorteil, dass je nach herrschenden Gegebenheiten Übertragungsbandbreite und Rechenaufwand eingespart und sinnvoll zugeteilt werden können.

Auch kann im Schritt des Bestimmens die Integritätsinformation unter Verwendung einer Positionsinformation zumindest eines stationären Referenz-Satellitenempfangsgerätes als Quelle der Zustandssignale bestimmt werden. Eine Positionsinformation kann eine geografische Position eines stationären Referenz-Satellitenempfangsgerätes repräsentieren. Die Positionsinformation kann in Gestalt von Koordinatendaten einer geografischen Position oder in Gestalt von Identifikationsdaten vorliegen, aus denen indirekt eine geografische Position ermittelt werden kann. Eine solche Ausführungsform bietet den Vorteil, dass ein genauer und zuverlässiger Überblick über einen Zustand der Atmosphäre an unterschiedlichen geografischen Positionen gewonnen werden kann.

Ferner kann das Verfahren einen Schritt des Übertragens der Zustandssignale oder der Integritätsinformation an ein Satellitenempfangsgerät des Fahrzeugs aufweisen. Eine solche Ausführungsform bietet den Vorteil, dass eine Verwendung oder eine Verwendung und Bestimmung der Integritätsinformation fahrzeugseitig erfolgen kann. Hierbei kann je nach Anwendungsfall ein Rechenaufwand für das Satellitenempfangsgerät oder eine Fahrzeugeinrichtung eingespart und zusätzlich oder alternativ eine Übertragungsbandbreite reduziert werden.

Dabei kann der Schritt des Übertragens in Abhängigkeit von einem Ergebnis einer Schwellenwertentscheidung ausgeführt werden. Hierbei kann bei der Schwellenwertentscheidung ein Vergleich der Zustandssignale oder der Integritätsinformation mit einem auf die atmosphärischen Störungen bezogenen Schwellenwert durchgeführt werden. Eine solche Ausführungsform bietet den Vorteil, dass ähnlich einer Filterung lediglich relevante bzw. erhebliche Zustandssignale oder Integritätsinformationen weiterverarbeitet oder verwendet werden. Somit können Rechenaufwand und Übertragungsbandbreite gesenkt werden.

Auch können dabei im Schritt des Übertragens Zustandssignale von ausgewählten stationären Referenz-Satellitenempfangsgeräten oder eine Integritätsinformation, die auf Zustandssignalen von ausgewählten stationären Referenz-Satellitenempfangsgeräten beruht, übertragen werden. Hierbei können die ausgewählten stationären Referenz-Satellitenempfangsgeräte abhängig von einer geografischen Position des Satellitenempfangsgeräts des Fahrzeugs ausgewählt sein. Eine solche Ausführungsform bietet den Vorteil, dass Rechenaufwand und Übertragungsbandbreite eingespart werden können, da lediglich regional relevante Zustandssignale oder Integritätsinformationen übertragen werden. Auch kann somit ein Zustand der Atmosphäre in einer interessierenden Region zuverlässiger und genauer erkannt werden.

Gemäß einer Ausführungsform können im Schritt des Einlesens Zustandssignale eingelesen werden, deren Zustandsdaten einen Gesamtelektroneninhalt als Kenngröße der Atmosphäre der Erde und zusätzlich oder alternativ Qualitätsindikatoren zumindest eines Satellitenempfangsgeräts repräsentieren. Hierbei kann der Gesamtelektroneninhalt als ein Produkt aus Elektronendichte und Weg, gemessen in Elektronen je Quadratmeter definiert sein. Dabei können die Qualitätsindikatoren Standardabweichungen und zusätzlich oder alternativ Varianzen hinsichtlich einer Signalübertragung mittels des zumindest einen Satellitenempfangsgeräts aufweisen. Im Schritt des Bestimmens kann oder können als Integritätsinformation ein Gradient des Gesamtelektroneninhalts über ein gegebenes Zeitintervall, eine Standardabweichung eines Gradienten des Gesamtelektroneninhalts über ein gegebenes Zeitintervall und zusätzlich oder alternativ eine zeitliche Änderung der Qualitätsindikatoren über ein gegebenes Zeitintervall bestimmt werden. Eine solche Ausführungsform bietet den Vorteil, dass anhand von so gearteten dynamischen Zustandsdaten verlässliche und genaue Aussagen über den Zustand der Atmosphäre in einem lokalen Bereich gewonnen werden können.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrundeliegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung kann die Vorrichtung als Teil eines Satellitenempfangsgeräts oder einer Signalübertragungsfähig mit zumindest einem Satellitenempfangsgerät verbundenen Einrichtung ausgeführt sein. Insbesondere kann die Vorrichtung fahrzeuggebunden ausgeführt sein, in einem Fahrzeug angeordnet sein und zusätzlich oder alternativ als ein Teil eines fahrzeuggebundenen Gerätes ausgeführt sein. Zusätzlich oder alternativ kann die Vorrichtung fahrzeugextern angeordnet und ausgeführt sein. Durch die Vorrichtung wird eine Überprüfung hinsichtlich einer Korrektur einer Signalübertragung zwischen zumindest einem Satelliten und einem Satellitenempfangsgerät zur satellitengestützten Navigation ermöglicht. Hierzu kann die Vorrichtung beispielsweise auf Zustandssignale und Satellitensignale zugreifen. Die Ansteuerung erfolgt über Signalübertragungseinrichtungen wie Sendegeräte, Sende-Empfangsgeräte und Antennen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:

Fig. 1 eine schematische Darstellung eines Satellitennavigationssystems gemäß einem Ausführungsbeispiel;

Fig. 2 eine schematische Darstellung des Satellitennavigationssystems aus Fig. 1 bei Vorliegen einer atmosphärischen Störung;

Fig. 3 eine schematische Darstellung des Satellitennavigationssystems aus Fig. 1 oder Fig. 2 bei Vorliegen einer atmosphärischen Störung;

Fig. 4 eine schematische Darstellung eines Satellitennavigationssystems mit einer Vorrichtung gemäß einem Ausführungsbeispiel;

Fig. 5 eine schematische Darstellung eines Satellitennavigationssystems mit einer Vorrichtung gemäß einem Ausführungsbeispiel; und

Fig. 6 ein Ablaufdiagramm eines Verfahrens zum Bereitstellen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

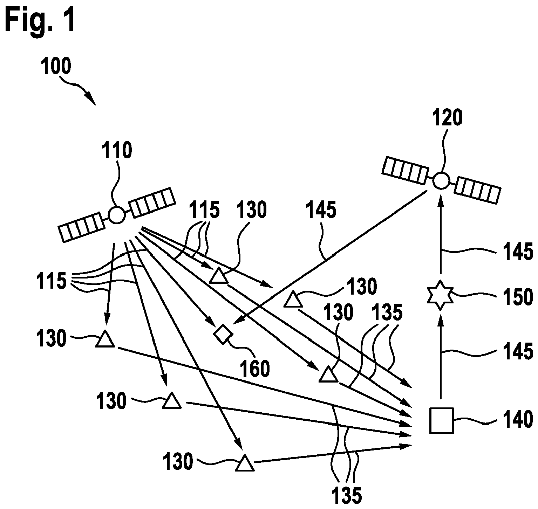

Fig. 1 zeigt eine schematische Darstellung eines Satellitennavigationssystems 100 gemäß einem Ausführungsbeispiel. Das Satellitennavigationssystem 100 weist gemäß dem hier dargestellten Ausführungsbeispiel lediglich beispielhaft einen Satelliten 110 bzw. GNSS-Satelliten 110 (GNSS = Global Navigation Satellite System; globales ziviles Satellitennavigationssystem), einen geostationären Übertragungssatelliten 120, eine Mehrzahl von GNSS-Empfangsstationen 130 bzw. GNSS-Referenzstationen 130 bzw. stationären Referenz-Satellitenempfangsgeräten 130 in einem Stationsnetzwerk eines Korrekturdatenanbieters, ein Datenverarbeitungszentrum 140 bzw. eine Datenverarbeitungseinrichtung 140 des Korrekturdatenanbieters, eine Übertragungsstation 150 bzw. Uplink-Station 150 zur Korrekturübertragung über den geostationären Übertragungssatelliten 120 und einen nutzerseitigen GNSS-Empfänger 160 bzw. ein nutzerseitiges Satellitenempfangsgerät 160 auf. Insbesondere auf die stationären Referenz-Satellitenempfangsgeräte 130, auf die Datenverarbeitungseinrichtung 140 und auf das nutzerseitige Satellitenempfangsgerät 160 wird unter Bezugnahme auf nachfolgende Figuren noch detaillierter eingegangen.

Die stationären Referenz-Satellitenempfangsgeräte 130 und das nutzerseitige Satellitenempfangsgerät 160 sind ausgebildet, um Satellitensignale 115, insbesondere Zweifrequenz-GNSS-Signale 115, von dem GNSS-Satelliten 110 zu empfangen. Ferner sind die stationären Satellitenempfangsgeräte 130 ausgebildet, um Zustandssignale 135 bzw. Messdaten der stationären Referenz-Satellitenempfangsgeräte 130 zur Netzwerkausgleichung, d. h. beispielsweise einer Parameterschätzung einschließlich einer Schätzung einer Elektronendichte und von Qualitätsindikatoren, an die Datenverarbeitungseinrichtung 140 zu übertragen. Die Datenverarbeitungseinrichtung 140 ist ausgebildet, um Korrekturdaten 145 bzw. Atmosphärenkorrekturparameter 145 über die Übertragungsstation 150 und den geostationären Übertragungssatelliten 120 an das nutzerseitige Satellitenempfangsgerät 160 zu übertragen.

Anders ausgedrückt ist in Fig. 1 ein Signalpfad von dem GNSS-Satelliten 110 bis zu einer Übertragung der Korrekturdaten 145 an das nutzerseitige Satellitenempfangsgerät 160 veranschaulicht. Exemplarisch ist in Fig. 1 lediglich ein GNSS-Satellit 110 abgebildet, wobei aber durch die stationären Referenz-Satellitenempfangsgeräte 130 und das nutzerseitige Satellitenempfangsgerät 160 die Satellitensignale 115 mehrerer Satelliten 110 gemessen werden können.

An den GNSS-Referenzstationen 130 im Korrekturdatennetzwerk wird insbesondere die Elektronendichte bzw. der sogenannte Total Electron Content (TEC) für jeden Signalpfad zwischen Satelliten und Receiver der jeweiligen GNSS-Referenzstation 130 nach gängigen Verfahren ermittelt. Die TEC-Werte dienen als Grundlage für ein durch den Korrekturdienst bzw. Korrekturdatenanbieter eingesetztes Ionosphärenmodell zur Berechnung eines globalen Vertikalen Total Electron Content (VTEC), d. h., für jede geografische Länge, geografische Breite und Zeit lässt sich ein VTEC-Wert berechnen, wobei zwischen den GNSS-Referenzstationen 130 Interpolationsansätze genutzt werden. Gängig sind z. B. eine Nutzung von Polynomen, Kugelflächenfunktionen, Kriging-Interpolationen, Voxels oder B-Splines. Jedes dieser Verfahren führt aber insbesondere zu einer Glättung der Daten zwischen Messungsstützpunkten. D. h. zwischen Messpunkten hängt eine Genauigkeit des ermittelten TEC vom genutzten Interpolationsverfahren ab. Es kann davon ausgegangen werden, dass der Wert lokal im Bereich der einzelnen GNSS-Referenzstationen 130 am genausten ist.

Als Ionosphäre wird ein Bereich der Hochatmosphäre beschrieben, der sich ungefähr zwischen 50 Kilometer und 1000 Kilometer Höhe erstreckt und oberhalb in die Plasmasphäre übergeht. Die Ionosphäre zeichnet sich durch eine erhöhte Konzentration an geladenen Partikeln aus, die durch Ionisationsprozesse in Abhängigkeit von der solaren Einstrahlung entsteht. Abhängig von der Frequenz und Stärke der Ionisation werden elektromagnetische Signale in der Ionosphäre gebrochen. Dadurch entstehen unter Umständen Signalverzögerungen in den Beobachtungen globaler Satellitennavigationssysteme, wie beispielsweise dem GNSS, die im Hinblick auf Positionierungs- und Navigationsanwendungen zu korrigieren sind. Bei der Verwendung von geodätischen Zweifrequenzempfängern können zwar Signalkombinationen angewendet werden, um einen Ionosphäreneinfluss erster Ordnung zu eliminieren, jedoch sollte ein Ionosphärenzustand bekannt sein, um möglichst geringe Konvergenzzeiten für eine hochgenaue Positionslösung zu erhalten. Einfrequenzempfänger greifen auf Atmosphärenmodelle zurück, um die Signale zu korrigieren und Genauigkeiten von weniger als 1 Meter zu erreichen. Gemäß Ausführungsbeispielen kann, wie unter Bezugnahme auf nachfolgende Figuren beschrieben, insbesondere ein solcher Ionosphäreneinfluss bei Positionierungs- und Navigationsanwendungen zuverlässig und genau korrigiert werden, wobei auch Aussagen über eine Integrität von Korrekturdaten 145 ermöglicht werden.

Als Grundlage kann beispielsweise die integrierte Elektronendichte bzw. der sogenannte Total Electron Content (TEC) als ein Korrekturparameter genutzt werden, da dieser beispielsweise direkt aus Zweifrequenz-GNSS-Beobachtungen extrahiert werden kann. Neben anderen GNSS-Korrekturdaten, wie hochpräzisen Satellitenbahndaten, Satellitenuhren, Troposphärenkorrekturen oder diversen Biases, werden beispielsweise auch Ionosphärenkorrekturdaten von sogenannten GNSS-Korrekturdiensten geliefert, um einem GNSS-Nutzer eine zentimetergenaue Position und geringe Konvergenzzeiten zu ermöglichen. GNSS-Korrekturdienste errechnen solche Korrekturdaten aus regionalen oder globalen Stationsnetzwerken mit GNSS-Empfängern bzw. GNSS-Referenzstationen 130. Während Bahn-, Uhren-, Troposphären- und Bias-Parameter aufgrund ihrer Charakteristik zuverlässig bestimmt werden können, ist dies bei der Ionosphärenkorrektur herkömmlicherweise nicht oder lediglich eingeschränkt der Fall. Aufgrund physikalischer Gegebenheiten, angesichts derer eine Stationsverteilung unzureichend ist, um ionosphärische Störungen am Ort des GNSS-Nutzers zu detektieren, werden von Korrekturdiensten daher herkömmlicherweise keine Zusagen bzgl. Fehlerauftrittswahrscheinlichkeiten bereitgestellt. Stattdessen liegt die Verantwortung für eine Integritätssicherung und damit eine Detektion von fehlerhaften Ionosphärenkorrekturen beim Nutzer. Dies betrifft insbesondere zeitlich bzw. räumlich kleinskalige, dynamische und irregulär auftretende Phänomene, wie sogenannte Traveling Ionospheric Disturbances (TIDs) unterschieden in Small-, Medium- und Large-Scale TIDs, Sudden Ionospheric Disturbances (SIDs), Spread F-Layer, Sporadische E-Layer, Ionosphärenstürme und Scintillationen. Gemäß Ausführungsbeispielen können jedoch, wie unter Bezugnahme auf nachfolgende Figuren beschrieben, auch Aussagen über eine Integrität solcher Korrekturdaten 145 ermöglicht werden.

Es können sogenannte ROT-Karten bzw. ROTI-Karten (ROT= Rate einer Elektronendichte, rate of TEC; TEC = Total Electron Content, Elektronendichte bzw. Gesamtelektroneninhalt - ROTI = Veränderungsrate eines Elektronendichteindex; rate of change of TEC index) generiert werden, d. h. gitterbasierte ROT-Werte bzw. ROTI-Werte, welche ionosphärische Störungen wiedergeben, soweit es eine zugrundeliegende Stationsverteilung erlaubt. Auf Basis kabelgebundener Übertragungswege wäre eine Übertragung und Überwachung des ROTI denkbar, wobei für Fahrzeuganwendungen zur Übertragung in diesem Fall meist kabellose Verbindungswege, wie Broadcast-Verfahren über geostationäre Übertragungssatelliten 120, eingesetzt und die Korrekturdaten 145 via L-Band übertragen werden. Es soll hier angemerkt werden, dass Korrekturparameter mit ihren Qualitätsindikatoren bzw. QI-Werten für ein vom Satellit 110 sichtbares bzw. abgedecktes Gebiet übermittelt werden können. Um einen effizienten Datentransfer bei niedriger Bandbreite zu schaffen, werden dabei z. B. Modellkoeffizienten übertragen, aus denen die entsprechenden Parameter flächendeckend rekonstruiert werden können. Gemäß Ausführungsbeispielen wird hierin beschrieben, dass insbesondere eine regionale Überwachung von ROT bzw. ROTI und von QI-Werte und deren Dynamik in einer Umgebung des Nutzers unter Berücksichtigung einer Übertragungsbandbreite und der Kosten ermöglicht werden kann.

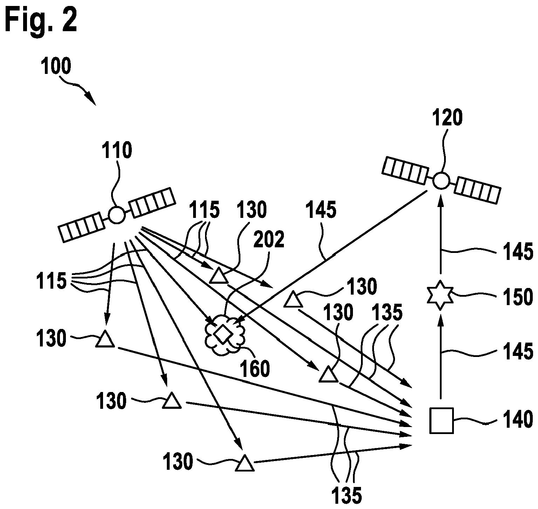

Fig. 2 zeigt eine schematische Darstellung des Satellitennavigationssystems 100 aus Fig. 1 bei Vorliegen einer atmosphärischen Störung 202. Die atmosphärische Störung 202 im Bereich des nutzerseitigen Satellitenempfangsgeräts 160 und zwischen GNSS-Referenzstationen 130 angeordnet. Auch eine solche, zwischen GNSS-Referenzstationen 130 auftretende ionosphärische Störung 202 kann gemäß Ausführungsbeispielen detektiert werden, sodass zusätzlich zu einem interpolierten Wert auch eine Information über die potenzielle Störung 202 geliefert werden kann. Somit kann eine Sicherung der Integrität vereinfacht und verbessert werden. Hierbei kann eine durch die atmosphärische Störung 202 bedingte Verfälschung der durch das nutzerseitige Satellitenempfangsgerät 160 empfangenen Satellitensignale 115 korrigiert werden, wobei auch Informationen über eine Integrität der Korrekturdaten geliefert werden können. Auch wenn die atmosphärische Störung 202 an den GNSS-Referenzstationen 130 registriert bleibt, kann unter Verwendung der Korrekturdaten 145 und unter Berücksichtigung der Integritätsinformation der Fehlereinfluss kompensiert werden.

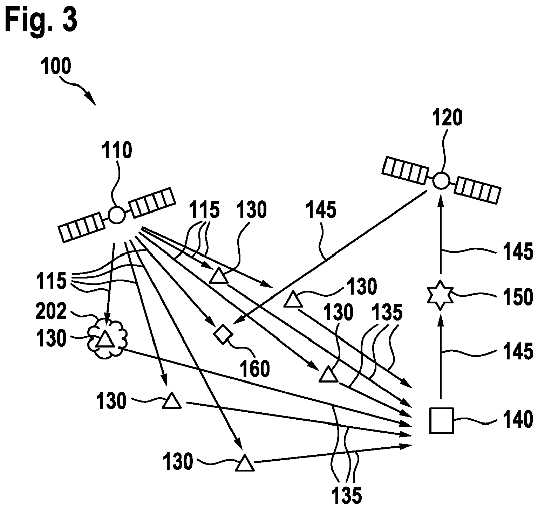

Fig. 3 zeigt eine schematische Darstellung des Satellitennavigationssystems 100 aus Fig. 1 oder Fig. 2 bei Vorliegen einer atmosphärischen Störung 202. Hierbei ist die atmosphärische Störung 202 im Bereich einer der GNSS-Referenzstationen 130 angeordnet. Selbst wenn sich eine ionosphärische Störung bzw. atmosphärische Störung 202 über einer GNSS-Referenzstation 130 befindet, welche zur Berechnung der Korrekturdaten 145 beiträgt, kann gemäß Ausführungsbeispielen ermöglicht werden, dass Aussagen über die Integrität der Korrekturdaten 145 getroffen werden können. Typischerweise werden insbesondere Qualitätsindikatoren (QI) in Form von Standardabweichungen bzw. Varianzen für einzelne Korrekturparameter übertragen, jedoch sollte ein mathematisches Modell, welches hinter einer Netzwerkausgleichung des Korrekturdienstes bzw. Korrekturdatenanbieters steht, die atmosphärische Störung 202 auch in der Varianz widerspiegeln. Da gemäß Ausführungsbeispielen Integritätsaussagen bzw. Zuverlässigkeitsaussagen getroffen werden können, kann eine Verantwortung zur Sicherung der Integrität auch in diesem Fall von einem Nutzer genommen werden. In der Darstellung von Fig. 3 ist beispielhaft lediglich eine GNSS-Referenzstation 130, welche zur Berechnung der Korrekturdaten 145 beiträgt, von der atmosphärischen Störung 202 betroffen. Der Nutzer bzw. das nutzerseitige Satellitenempfangsgerät 160 braucht sich nicht mehr darauf zu verlassen, dass sich eine derartige Störung 202 in einem zum TEC mitgelieferten Qualitätsindikator widerspiegelt, denn es wird mehr als nur der Qualitätsindikator an einer Nutzerposition, der aus einer Berechnung umliegender GNSS-Referenzstationen 130 resultiert, geliefert und führt somit zu erhöhter Unabhängigkeit von einem Modell des Korrekturdatenanbieters. Des Weiteren kann der Korrekturdatenanbieter die von der atmosphärischen Störung 202 betroffene GNSS-Referenzstation 130 nach Erkennung der Störung 202 auch aus der Ausgleichung nehmen oder heruntergewichten.

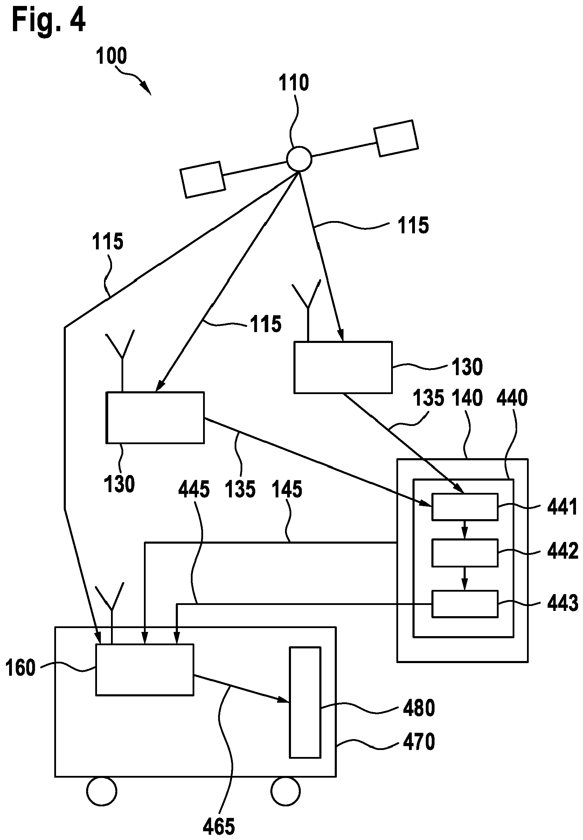

Fig. 4 zeigt eine schematische Darstellung eines Satellitennavigationssystems 100 mit einer Vorrichtung 440 gemäß einem Ausführungsbeispiel. Das Satellitennavigationssystem 100 entspricht oder ähnelt hierbei dem Satellitennavigationssystem aus einer der vorstehend beschriebenen Figuren. Dabei sind von dem Satellitennavigationssystem 100 in der Darstellung von Fig. 4 der Satellit 110, beispielhaft lediglich zwei der stationären Satellitenempfangsgeräte 130, die Datenverarbeitungseinrichtung 140, das Satellitenempfangsgerät 160 bzw. nutzerseitige Satellitenempfangsgerät 160 und die Vorrichtung 440 gezeigt.

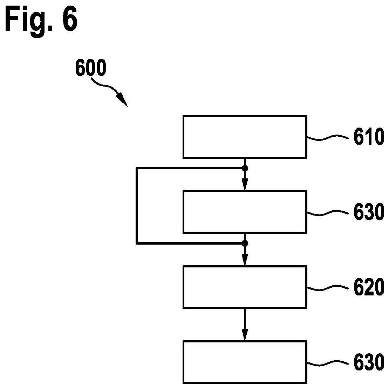

Die stationären Satellitenempfangsgeräte 130 sind ausgebildet, um die Satellitensignale 115 von dem Satelliten 110 zu empfangen. Die Datenverarbeitungseinrichtung 140 ist ausgebildet, um die Zustandssignale 135 von den stationären Satellitenempfangsgeräten 130 zu empfangen. Das nutzerseitige Satellitenempfangsgerät 160 ist in einem Fahrzeug 470 angeordnet. Das nutzerseitige Satellitenempfangsgerät 160 ist ausgebildet, um die Atmosphärenkorrekturparameter 145 zur Korrektur atmosphärischer Störungen bei einer Satellitennavigation für das Fahrzeug 470 von der Datenverarbeitungseinrichtung 140 zu empfangen. Das Satellitenempfangsgerät 160 des Fahrzeugs 470 ist auch ausgebildet, um Satellitensignale 115 von dem Satelliten 110 zu empfangen. Somit kann nutzerseitig eine ROT-, ROTI- bzw. ROQ-Information bestimmt werden, um eine Einschätzung einer aktuellen atmosphärischen bzw. ionosphärischen Aktivität zu erhalten und/oder eingehende Korrekturdaten für Atmosphärenfehler bzw. Ionosphärenfehler zu plausibilisieren. ROQ steht dabei für Rate of Quality und wird weiter unten im Zusammenhang mit Fig. 6 näher erläutert.

Die Vorrichtung 440 ist gemäß dem in Fig. 4 dargestellten Ausführungsbeispiel als ein Teil der Datenverarbeitungseinrichtung 140 ausgeführt. Die Vorrichtung 440 ist ausgebildet, um eine Integritätsinformation 445 zum Überprüfen der Atmosphärenkorrekturparameter 135 zur Korrektur atmosphärischer Störungen bei einer Satellitennavigation für das Fahrzeug 470 bereitzustellen. Dazu weist die Vorrichtung 440 eine Einleseeinrichtung 441 und eine Bestimmungseinrichtung 442 auf.

Die Einleseeinrichtung 441 ist ausgebildet, um die Zustandssignale 135 von den stationären Satellitenempfangsgeräten 130 einzulesen. Die Zustandssignale 135 sind Signale hinsichtlich eines Zustands der Atmosphäre zwischen den Satellitenempfangsgeräten 130 und dem Satelliten 110. Jedes Zustandssignal 135 repräsentiert unter Verwendung mindestens eines zwischen dem Satelliten 110 und einem stationären Satellitenempfangsgerät 130 übertragenen Satellitensignals 115 bestimmte und von einem Zustand der Atmosphäre zwischen dem Satelliten 110 und dem stationären Satellitenempfangsgerät 130 abhängige Zustandsdaten.

Die Bestimmungseinrichtung 442 ist ausgebildet, um die Integritätsinformation 445 unter Verwendung der Zustandsdaten der mittels der Einleseeinrichtung 441 eingelesenen Zustandssignale 135 zu bestimmen. Hierbei ist die Bestimmungseinrichtung 442 ausgebildet, um eine zeitliche Veränderung der Zustandsdaten auszuwerten.

Gemäß einem Ausführungsbeispiel ist die Einleseeinrichtung 441 ausgebildet, um Zustandssignale 135 einzulesen, deren Zustandsdaten einen Gesamtelektroneninhalt als Kenngröße der Atmosphäre der Erde und/oder Qualitätsindikatoren zumindest eines Satellitenempfangsgeräts 130 repräsentieren. Der Gesamtelektroneninhalt ist hierbei als ein Produkt aus Elektronendichte und Weg, gemessen in Elektronen je Quadratmeter definiert. Die Qualitätsindikatoren weisen Standardabweichungen und/oder Varianzen hinsichtlich einer Signalübertragung mittels des zumindest einen Satellitenempfangsgeräts auf. Dabei ist die Bestimmungseinrichtung 442 ausgebildet, um einen Gradienten des Gesamtelektroneninhalts über ein gegebenes Zeitintervall, eine Standardabweichung eines Gradienten des Gesamtelektroneninhalts über ein gegebenes Zeitintervall und/oder eine zeitliche Änderung der Qualitätsindikatoren über ein gegebenes Zeitintervall als Integritätsinformation 445 zu bestimmen.

Gemäß dem in Fig. 4 dargestellten Ausführungsbeispiel ist die Bestimmungseinrichtung 442 als eine fahrzeugexterne Bestimmungseinrichtung 442 ausgeführt. Alternativ kann die Bestimmungseinrichtung 442 auch als ein Teil zumindest eines stationären Referenz-Satellitenempfangsgeräts 130 ausgeführt sein.

Gemäß einem Ausführungsbeispiel ist die Einleseeinrichtung 441 ausgebildet, um eine Positionsinformation der stationären Referenz-Satellitenempfangsgeräte 130 als Quelle der Zustandssignale 135 einzulesen, insbesondere zusammen mit den Zustandssignalen 135. Hierbei ist die Bestimmungseinrichtung 442 ausgebildet, um die Integritätsinformation 445 unter Verwendung der Positionsinformation zu bestimmen.

Gemäß dem in Fig. 4 dargestellten Ausführungsbeispiel weist die Vorrichtung 440 auch eine Übertragungseinrichtung 443 zum Übertragen der mittels der Bestimmungseinrichtung 442 bestimmten Integritätsinformation 445 an das Satellitenempfangsgerät 160 des Fahrzeugs 470 auf. Optional ist die Übertragungseinrichtung 443 ausgebildet, um die Integritätsinformation 445 in Abhängigkeit von einem Ergebnis einer Schwellenwertentscheidung zu übertragen. Bei der Schwellenwertentscheidung wird ein Vergleich der Zustandssignale 135 oder der Integritätsinformation 445 mit einem auf die atmosphärischen Störungen bezogenen Schwellenwert durchgeführt. Ferner ist die Übertragungseinrichtung 443 optional ausgebildet, um eine Integritätsinformation 445 zu übertragen, die auf Zustandssignalen 135 von ausgewählten stationären Referenz-Satellitenempfangsgeräten 130 beruht. Die ausgewählten stationären Referenz-Satellitenempfangsgeräte 130 sind insbesondere abhängig von einer geografischen Position des Satellitenempfangsgeräts 160 des Fahrzeugs 470 ausgewählt.

Das Satellitenempfangsgerät 160 des Fahrzeugs 470 ist ausgebildet, um die Atmosphärenkorrekturparameter 145 unter Verwendung der mittels der Vorrichtung 440 bereitgestellten Integritätsinformation 445 zu überprüfen, um hinsichtlich einer Integrität überprüfte Atmosphärenkorrekturparameter zu erzeugen. Somit kann das nutzerseitige Satellitenempfangsgerät 160 ausgebildet sein, um unter Verwendung der überprüften Atmosphärenkorrekturparameter 145 eine Eigenposition des nutzerseitige Satellitenempfangsgeräts 160 bzw. des Fahrzeugs 470 zu ermitteln.

Gemäß dem in Fig. 4 dargestellten Ausführungsbeispiel ist das nutzerseitige Satellitenempfangsgerät 160 ferner ausgebildet, um ein Ausgangssignal 465, welches die ermittelte Eigenposition repräsentiert, zur Ausgabe an eine weitere Fahrzeugeinrichtung 480 bereitzustellen.

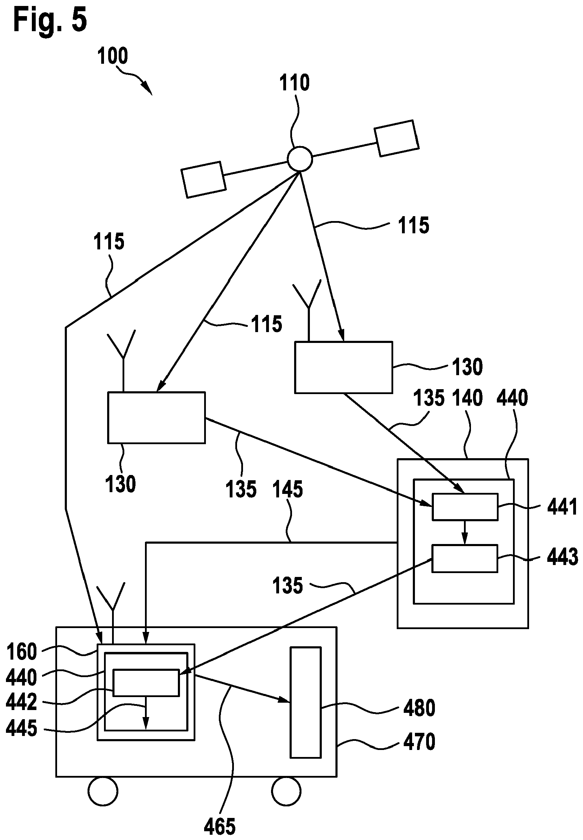

Fig. 5 zeigt eine schematische Darstellung eines Satellitennavigationssystems 100 mit einer Vorrichtung 440 gemäß einem Ausführungsbeispiel. Hierbei entspricht das Satellitennavigationssystem 100 dem Satellitennavigationssystem aus Fig. 4 mit Ausnahme dessen, dass die Bestimmungseinrichtung 442 der Vorrichtung 440 als ein Teil des nutzerseitigen Satellitenempfangsgeräts 160 bzw. Satellitenempfangsgeräts 160 des Fahrzeugs 470 ausgeführt ist. Somit ist die Vorrichtung 440 auf die Datenverarbeitungseinrichtung 140 und das nutzerseitige Satellitenempfangsgerät 160 aufgeteilt bzw. verteilt ausgeführt. Dabei ist die Übertragungseinrichtung 443 ausgebildet, um die Zustandssignale 135 an das nutzerseitige Satellitenempfangsgerät 160 bzw. genauer gesagt an die Bestimmungseinrichtung 442 zu übertragen. Gemäß einem Ausführungsbeispiel ist die Übertragungseinrichtung 443 ausgebildet, um Zustandssignale 135 von ausgewählten stationären Referenz-Satellitenempfangsgeräten 130 zu übertragen. Die Bestimmungseinrichtung 442 ist ausgebildet, um die Integritätsinformation 445 für eine Verwendung durch das nutzerseitige Satellitenempfangsgerät 160 freizugeben.

Fig. 6 zeigt ein Ablaufdiagramm eines Verfahrens 600 zum Bereitstellen gemäß einem Ausführungsbeispiel. Das Verfahren 600 ist ausführbar, um eine Integritätsinformation zum Überprüfen von Atmosphärenkorrekturparametern zur Korrektur atmosphärischer Störungen bei einer Satellitennavigation für ein Fahrzeug bereitzustellen. Dabei ist das Verfahren 600 zum Bereitstellen mittels einer Vorrichtung aus einer der vorstehend beschriebenen Figuren ausführbar.

In einem Schritt 610 des Einlesens werden bei dem Verfahren 600 zum Bereitstellen Zustandssignale hinsichtlich eines Zustands der Atmosphäre zwischen zumindest einem Satellitenempfangsgerät und zumindest einem Satelliten von dem zumindest einen Satellitenempfangsgerät eingelesen. Jedes Zustandssignal repräsentiert unter Verwendung mindestens eines zwischen einem Satelliten und einem Satellitenempfangsgerät übertragenen Satellitsignals bestimmte und von einem Zustand der Atmosphäre zwischen dem Satelliten und dem Satellitenempfangsgerät abhängige Zustandsdaten. Nachfolgend wird in einem Schritt 620 des Bestimmens unter Verwendung der Zustandsdaten die Integritätsinformation bestimmt. Hierbei wird eine zeitliche Veränderung der Zustandsdaten ausgewertet.

Gemäß einem Ausführungsbeispiel wird der Schritt 610 des Bestimmens mittels zumindest eines stationären Referenz-Satellitenempfangsgeräts, mittels einer fahrzeugexternen Bestimmungseinrichtung und/oder mittels eines Satellitenempfangsgeräts des Fahrzeugs ausgeführt.

Gemäß einem weiteren Ausführungsbeispiel weist das Verfahren 600 zum Bereitstellen auch einen Schritt 630 des Übertragens auf. In dem Schritt 630 des Übertragens werden die Zustandssignale oder wird die Integritätsinformation an ein Satellitenempfangsgerät des Fahrzeugs übertragen. Der Schritt 630 des Übertragens ist vor oder nach dem Schritt 620 des Bestimmens ausführbar.

Unter Bezugnahme auf die vorstehend beschriebenen Figuren, insbesondere die Figuren 4 bis 6, werden nachfolgend Ausführungsbeispiele sowie Vorteile von Ausführungsbeispielen mit anderen Worten zusammenfassend nochmals kurz erläutert und/oder vorgestellt.

Zunächst soll auf die Integritätsüberwachung auf Basis des ROT bzw. ROTI mittels der Vorrichtung 440 eingegangen werden.

Es kann davon ausgegangen werden, dass Interpolationsfehler des TEC vertikal über den stationären Referenz-Satellitenempfangsgeräten 130 gering sind, da im direkten Umfeld typischerweise mehrere Satelliten 110 gleichzeitig beobachtet werden können, welche Informationen zur Bestimmung des TEC liefern. Es wird daher vorgeschlagen, an den Positionen der stationären Referenz-Satellitenempfangsgeräte 130 die Rate des TEC (ROT) als Quotient

$$ROT = \frac{\Delta VTEC}{\Delta t} = \frac{\Phi_{GF}(i) - \Phi_{GF}(i-1)}{\Delta t \cdot 10^{16} \cdot 40.3 \cdot \left(\frac{1}{f_1^2} - \frac{1}{f_2^2}\right)}$$    (Gleichung 1)

zu bestimmen, wobei $\Delta VTEC$ der zeitliche TEC-Gradient im Zenit bzw. der vertikale TEC ist und $\Delta t$ das zeitliche Sampling ist. Ferner steht $\Phi_{GF}$ hierbei für eine geometriefreie Linearkombination aus Zweifrequenz-Phasenmessungen auf Frequenzen $f_1$ und $f_2$. Eine Nutzung eines schrägen TEC (STEC) zwischen stationären Referenz-Satellitenempfangsgeräten 130 und Satellit 110 wird hier ignoriert, da sich räumliche (durch Satellitenbewegung) und zeitliche TEC-Veränderungen sonst gemeinsam in der Berechnung des ROT mischen würden und der ROT satellitenspezifisch bereitzustellen wäre. Es soll angemerkt werden, dass Berechnungen des VTEC bzw. STEC auf gängigen Methoden fundieren und deshalb nicht im Detail erklärt werden.

Generell repräsentiert ROT somit einen zeitlichen TEC-Gradienten bei gegebenem Zeitintervall und dient als Grundlage zur Berechnung von ROTI:

$$ROTI = \sqrt{\frac{1}{N}\sum_{j=i-N}^{i}(ROT(j) - \overline{ROT})^2}$$    (Gleichung 2)

ROTI ist als Standardabweichung von ROT über ein Zeitintervall bzw. über eine definierte Stützpunktanzahl N definiert. Es liegen mit ROT und ROTI zwei Maße zur Detektion von ionosphärischen bzw. atmosphärischen Störungen 202 vor. Abhängig von einer Messfrequenz des jeweiligen GNSS-Empfängers 130 bzw. stationären Referenz-Satellitenempfangsgeräts 130 sind somit auch Scintillationen detektierbar, welche in herkömmlichen geodätischen Anwendungen normalerweise nur von hochpreisigen Scintillationsempfängern erfassbar sind. Im Zuge von Entwicklungen für hochautomatisiertes Fahren, bei denen hohe Messfrequenzen und hohe Genauigkeiten unter Verwendung von kostengünstigen Sensoren gefordert sind, z. B. im Hinblick auf Autobahnfahrten, ist es somit denkbar, dass auch kostengünstige Satellitenempfangsgeräte 130 bzw. 160 eingesetzt werden könnten. Vorgeschlagene Intervall-Längen zur hochauflösenden zeitlichen Erfassung ionosphärischer bzw. atmosphärischer 202 Störungen sind z. B. Zeitschritte von 1/30s zur Berechnung von ROT und 5 Minuten Zeitfensterlänge zur Ermittlung von ROTI.

Gemäß dem in Fig. 4 dargestellten Ausführungsbeispiel ist die Übertragungseinrichtung 443 ausgebildet, um als Integritätsinformation 445 die ROT-Werte bzw. ROTI-Werte für die einzelnen stationären Referenz-Satellitenempfangsgeräte 130 mit einer Stationsidentifikation an das nutzerseitige Satellitenempfangsgerät 160 zu übertragen. Um Bandbreite und damit Kosten einzusparen, sind diesbezüglich Varianten denkbar, wobei z. B.: lediglich Daten einzelner ausgewählter stationärer Referenz-Satellitenempfangsgeräte 130 übertragen werden; mehrere stationäre Referenz-Satellitenempfangsgeräte 130 zur Berechnung eines gebietsabhängigen ROT bzw. ROTI genutzt werden, bei vorheriger Kenntlichmachung solcher Gebiete, sodass eine Zuordnung erfolgen kann; lediglich ROTI-Indices übertragen werden, die einen definierten Schwellenwert überschreiten. Somit ergibt sich für das nutzerseitige Satellitenempfangsgerät 160 ein verringerter Rechenaufwand durch Berechnung des ROT bzw. ROTI in der Datenverarbeitungseinrichtung 140.

Gemäß dem in Fig. 5 dargestellten Ausführungsbeispiel wird die Integritätsinformation 445 in dem nutzerseitigen Satellitenempfangsgerät 160 bestimmt, wobei ROT bzw. ROTI an den Positionen der stationären Referenz-Satellitenempfangsgeräte 130 des Korrekturdienstes unter Verwendung der übertragenen TEC-Werte als Zustandsdaten bestimmt werden. Somit kann eine Bandbreite zur Übertragung eingespart werden. Um einen Berechnungsaufwand in dem nutzerseitigen Satellitenempfangsgerät 160 zu minimieren, kann zudem eine Auswahl aus nahegelegenen stationären Referenz-Satellitenempfangsgeräten 130 getroffen werden und ROT bzw. ROTI nur für diese berechnet werden.

In beiden Fällen liegen dem nutzerseitigen Satellitenempfangsgerät 160 als die Integritätsinformation 445 somit ROT-Werte bzw. ROTI-Werte für Stationspositionen des Korrekturnetzwerkes vor, die mindestens repräsentativ für ein Umfeld einer geografischen Position des nutzerseitigen Satellitenempfangsgeräts 160 sind, d. h. in beiden Fällen können daher eine Positionsinformation bzw. Stationskoordinaten der stationären Referenz-Satellitenempfangsgeräte 130 bereitgestellt werden. Insbesondere lassen sich damit einzelne stationäre Referenz-Satellitenempfangsgeräte 130 in der Umgebung des nutzerseitigen Satellitenempfangsgeräts 160 evaluieren, um festzustellen, ob Diskrepanzen auf lokale Störungen im Umfeld hindeuten. Das Auftreten erhöhter ROT-Werte bzw. ROTI-Werte lässt auf ionosphärische bzw. atmosphärische Störungen 202 rückschließen, was möglicherweise zu fehlerhaften Korrekturdaten bzw. Atmosphärenkorrekturparametern 145 führen könnte.

Als weitere Maßnahme ist es im Falle eines Zweifrequenz-GNSS-Empfängers als nutzerseitiges Satellitenempfangsgerät 160 möglich, für seine eigene Position ROT bzw. ROTI ohne Verwendung von Korrekturdaten bzw. Atmosphärenkorrekturparametern 145 zu ermitteln und mit aus der Umgebung stammenden Werten des Korrekturdienstes zu vergleichen. Hierbei kann der VTEC an der geografischen Position des nutzerseitigen Satellitenempfangsgeräts 160 aus STEC-Messungen zu mehreren Satelliten 110 hergeleitet werden. Folgende optionale Maßnahmen werden vorgeschlagen: ROT bzw. ROTI sollte aus Messungen zu Satelliten 110 in hoher Elevation bzw. nahe dem Zenit abgeleitet werden, um Fehlereinflüsse durch horizontnahe Messungen zu minimieren. Grundsätzlich wird der $\Delta$TEC auch hier zu Satelliten 110 in der Umgebung des nutzerseitigen Satellitenempfangsgeräts 160 bestimmt, d. h. es kann eine Interpolation, z. B. Polynominterpolation, nutzerseitig durchgeführt werden, durch welche der $\Delta$VTEC an einer geografischen Position des nutzerseitigen Satellitenempfangsgeräts 160 ermittelt werden kann. Diskrepanzen zwischen ROT bzw. ROTI des Korrekturservice bzw. Korrekturdatenanbieters und der selbstbestimmten Integritätsinformation 445 lassen rückschließen, dass entweder eine durch den Korrekturservice unerkannte lokale ionosphärische bzw. atmosphärische Störung 202 im Gebiet des nutzerseitigen Satellitenempfangsgeräts 160 vorliegt, z. B. eine Scintillation, oder eine atmosphärische Störung 202 an einem stationären Referenz-Satellitenempfangsgerät 130 anliegt, die das nutzerseitige Satellitenempfangsgerät 160 eventuell zukünftig erreicht, z. B. Travelling Ionospheric Disturbances (TID). Letzteres kann darauf hindeuten, dass die Korrekturdaten bzw. Atmosphärenkorrekturparameter 145 möglicherweise bereits verfälscht sind.

Nun wird noch auf die Integritätsüberwachung auf Basis von TEC-Qualitätsindikatoren mittels der Vorrichtung 440 eingegangen.

Im Gegensatz zu ROT-Parametern bzw. ROTI-Parametern, welche zur Detektion empfängerspezifischer Störungen genutzt werden können, werden Qualitätsindikatoren (QI), typischerweise Standardabweichungen oder Varianzen, welche aus einer Netzwerkausgleichung im Korrekturnetz resultieren und zusammen mit den Atmosphärenkorrekturparametern 145 bzw. TEC-Korrekturen ausgegeben werden, zusätzlich oder alternativ für die Integritätsüberwachung genutzt. Zum einen können hierfür direkt QI-Werte verwendet werden und zum anderen kann eine Änderung der QI-Werte an den stationären Referenz-Satellitenempfangsgeräten 130 (ähnlich wie bei ROT) überwacht werden. Dieser auf der Änderung basierende Parameter wird im Folgenden als ROQ (Rate of Quality) bezeichnet. Die QI sind nicht direkt empfängerspezifisch, sondern hängen von der Netzwerkausgleichung und einem zugrundeliegenden mathematischen Modell ab. Oft werden als QI die Standardabweichungen bzw. Varianzen verwendet, welche aus der Netzwerkausgleichung resultieren und in einer Kovarianzmatrix enthalten sind. Für den Fall, dass der QI als Standardabweichung übermittelt wird, ergibt sich damit ähnlich wie bei ROT beispielsweise folgender Zusammenhang:

$$ROQ = \frac{\Delta\sigma_{VTEC}}{\Delta t}, \hspace{3cm} \text{(Gleichung 3)}$$

wobei $\Delta\sigma_{VTEC}$ eine zeitliche Änderung der aus dem Netzwerk des Korrekturservice bzw. Korrekturdaten Anbieters bestimmten Standardabweichung über das Zeitfenster $\Delta t$ repräsentiert. Es wird vorgeschlagen, die für ROT bzw. ROTI beschriebenen Methoden für Qualitätsindikatoren bzw. ROQ anzuwenden. Demnach bestehen entsprechend folgende Fälle:

Gemäß dem in Fig. 4 dargestellten Ausführungsbeispiel ist die Übertragungseinrichtung 443 ausgebildet, um als Integritätsinformation 445 die QI bzw. ROQ für die einzelnen stationären Referenz-Satellitenempfangsgeräte 130 mit einer Stationsidentifikation an das nutzerseitige Satellitenempfangsgerät 160 zu übertragen. Varianten bzw. Maßnahmen zur Nutzung ausgewählter Stationen, gebietsabhängiger Qualitätsindikatoren sowie Übertragung von einen Schwellenwert überschreitenden Qualitätsindikatoren, wie vorstehend für ROT bzw. ROTI beschrieben, sind ebenfalls umsetzbar.

Gemäß dem in Fig. 5 dargestellten Ausführungsbeispiel werden die Qualitätsindikatoren an den Positionen der stationären Referenz-Satellitenempfangsgeräte 130 des Korrekturdienstes durch das nutzerseitige Satellitenempfangsgerät 160 abgefragt und wird die Integritätsinformation 445 in Gestalt des ROQ in dem nutzerseitigen Satellitenempfangsgerät 160 bestimmt, da die Qualitätsindikatoren, wie der TEC, flächendeckend vom Korrekturservice übertragen werden.

ROQ repräsentiert Unsicherheiten in der Ermittlung der Korrekturdaten bzw. Atmosphärenkorrekturparameter 145, sodass in diesem Fall Defizite in der Ermittlung der Atmosphärenkorrekturparameter 145 aufgrund ionosphärischer bzw. atmosphärischer Störungen 202 an den einzelnen stationären Referenz-Satellitenempfangsgeräten 130 aufgedeckt werden können. Diese Aussage ergänzt ROTI für ein stationäres Referenz-Satellitenempfangsgerät 130 in dem Sinne, dass die TEC-Gradienten, welche tatsächlich durch Glättung in einer Interpolation oder durch Heruntergewichtung eines gestörten stationären Referenz-Satellitenempfangsgeräts 130 in der Ausgleichung klein ausfallen und nicht zu verdächtigen ROTI-Werten führen, in den ROQ-Werten aufgedeckt werden können, da sich ionosphärische bzw. atmosphärische Störungen 202 in größeren Unsicherheiten einer Parameterschätzung, d. h. größeren Standardabweichungen, abbilden.

Ferner ist es ebenfalls möglich, den ROQ für die geografische Position des nutzerseitigen Satellitenempfangsgeräts 160 zu berechnen, sodass auch hier eine Möglichkeit zur Plausibilisierung von Unsicherheiten gegeben ist. Es ist jedoch anzumerken, dass ROQ im Unterschied zu ROT an der Position des nutzerseitigen Satellitenempfangsgeräts 160 lediglich aus den Atmosphärenkorrekturparametern 145 bestimmt werden kann, da hier eine Parameterschätzung des TEC unterbleibt bzw. eine Messredundanz für eine derartige Ausgleichung fehlt und damit normalerweise keine eigens berechneten Qualitätsindikatoren vorliegen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (600) zum Bereitstellen einer Integritätsinformation (445) zum Überprüfen von Atmosphärenkorrekturparametern (145) zur Korrektur atmosphärischer Störungen (202) bei einer Satellitennavigation für ein Fahrzeug (470), wobei das Verfahren (600) folgende Schritte aufweist:

   Einlesen (610) von Zustandssignalen (135) hinsichtlich eines Zustands der Atmosphäre zwischen zumindest einem Satellitenempfangsgerät (130; 160) und zumindest einem Satelliten (110) von dem zumindest einen Satellitenempfangsgerät (130; 160), wobei jedes Zustandssignal (135) unter Verwendung mindestens eines zwischen einem Satelliten (110) und einem Satellitenempfangsgerät (130; 160) übertragenen Satellitensignals (115) bestimmte und von einem Zustand der Atmosphäre zwischen dem Satelliten (110) und dem Satellitenempfangsgerät (130; 160) abhängige Zustandsdaten repräsentiert; und
   Bestimmen (620) der Integritätsinformation (445) unter Verwendung der Zustandsdaten, wobei eine zeitliche Veränderung der Zustandsdaten ausgewertet wird.

2. Verfahren (600) gemäß Anspruch 1, bei dem der Schritt (620) des Bestimmens mittels zumindest eines stationären Referenz-Satellitenempfangsgeräts (130), mittels einer fahrzeugexternen Bestimmungseinrichtung (442) und/oder mittels eines Satellitenempfangsgeräts (160) des Fahrzeugs (470) ausgeführt wird.

3. Verfahren (600) gemäß einem der vorangegangenen Ansprüche, bei dem im Schritt (620) des Bestimmens die Integritätsinformation (445) unter Verwendung einer Positionsinformation zumindest eines stationären Referenz-Satellitenempfangsgerätes (130) als Quelle der Zustandssignale (135) bestimmt wird.

4. Verfahren (600) gemäß einem der vorangegangenen Ansprüche, mit einem Schritt (630) des Übertragens der Zustandssignale (135) oder der Integritätsinformation (445) an ein Satellitenempfangsgerät (160) des Fahrzeugs (470).

5. Verfahren (600) gemäß Anspruch 4, bei dem der Schritt (630) des Übertragens in Abhängigkeit von einem Ergebnis einer Schwellenwertentscheidung ausgeführt wird, wobei bei der Schwellenwertentscheidung ein Vergleich der Zustandssignale (135) oder der Integritätsinformation (445) mit einem auf die atmosphärischen Störungen (202) bezogenen Schwellenwert durchgeführt wird.

6. Verfahren (600) gemäß einem der Ansprüche 4 bis 5, bei dem im Schritt (630) des Übertragens Zustandssignale (135) von ausgewählten stationären Referenz-Satellitenempfangsgeräten (130) oder eine Integritätsinformation (445), die auf Zustandssignalen (135) von ausgewählten stationären Referenz-Satellitenempfangsgeräten (130) beruht, übertragen werden, wobei die ausgewählten stationären Referenz-Satellitenempfangsgeräte (130) abhängig von einer geografischen Position des Satellitenempfangsgeräts (160) des Fahrzeugs (470) ausgewählt sind.

7. Verfahren (600) gemäß einem der vorangegangenen Ansprüche, bei dem im Schritt (610) des Einlesens Zustandssignale (135) eingelesen werden, deren Zustandsdaten einen Gesamtelektroneninhalt als Kenngröße der Atmosphäre der Erde und/oder Qualitätsindikatoren zumindest eines Satellitenempfangsgeräts repräsentieren, wobei der Gesamtelektroneninhalt als ein Produkt aus Elektronendichte und Weg, gemessen in Elektronen je Quadratmeter definiert ist, wobei die Qualitätsindikatoren Standardabweichungen und/oder Varianzen hinsichtlich einer Signalübertragung mittels des zumindest einen Satellitenempfangsgeräts (130; 160) aufweisen, wobei im Schritt (620) des Bestimmens ein Gradient des Gesamtelektroneninhalts über ein gegebenes Zeitintervall, eine Standardabweichung eines Gradienten des Gesamtelektroneninhalts über ein gegebenes Zeitintervall und/oder eine zeitliche Änderung der Qualitätsindikatoren über ein gegebenes Zeitintervall als Integritätsinformation (445) bestimmt wird.

8. Vorrichtung (440), die eingerichtet ist, um Schritte des Verfahrens (600) gemäß einem der vorangegangenen Ansprüche in entsprechenden Einheiten auszuführen und/oder anzusteuern.

9. Computerprogramm, das dazu eingerichtet ist, das Verfahren (600) gemäß einem der vorangegangenen Ansprüche auszuführen und/oder anzusteuern.

10. Maschinenlesbares Speichermedium, auf dem das Computerprogramm nach Anspruch 9 gespeichert ist.

**Fig. 1**

# Fig. 2

# Fig. 3

# Fig. 4

# Fig. 5

**Fig. 6**

600

610

630

620

630

**Europäisches Patentamt**
**European Patent Office**
**Office européen des brevets**

# EUROPÄISCHER RECHERCHENBERICHT

**Nummer der Anmeldung**

EP 18 21 0766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BERDERMANN J ET AL: "Ionospheric Monitoring and Prediction Center (IMPC)", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12. September 2014 (2014-09-12), Seiten 14-21, XP056007636, * Seite 15 - Seite 20 * | 1-10 | INV. G01S19/08 G01S19/07 |
| X | COLOMBO OSCAR L ET AL: "Extending Wide Area and Virtual Reference Station Networks Far Into the Sea With GPS Buoys", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16. September 2005 (2005-09-16), Seiten 560-572, XP056009605, * Kapitel "Integrity Monitoring of Ionospheric Corrections"; Seite 564 * * Kapitel "Ionospheric Corrections for Use in WAAS/EGNOS-Type Networks"; Seite 571 * | 1-10 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 8. Juli 2019 | Haugg, Sabine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument